# EUROPEAN PATENT SPECIFICATION

(11) **EP 2 800 539 B1**
(45) Date of publication and mention of the grant of the patent: **27.06.2018**
(21) Application number: 12846802.2
(22) Date of filing: 21.12.2012
(51) Int. Cl.: A61C 8/00

(54) **OSTEO-INTEGRATABLE BIOMEDICAL IMPLANT WITH CONOMETRIC CONNECTION**
OSTEOINTEGRIERBARES BIOMEDIZINISCHES IMPLANTAT MIT KONOMETRISCHER VERBINDUNG
IMPLANT BIOMÉDICAL OSTÉO-INTÉGRABLE POURVU D'UN RACCORD CONOMÉTRIQUE

(30) Priority: 22.12.2011 IT UD20110209
(43) Date of publication of application: 12.11.2014
(73) Proprietor: Moro, Sergio, 6877 Coldrerio (CH)
(72) Inventor: Moro, Sergio, 6877 Coldrerio (CH)
(74) Representative: Petraz, Gilberto Luigi
(86) International application number: PCT/IB2012/002772
(87) International publication number: WO 2013/098627

(56) References cited:
- WO-A1-2006/008346
- US-A1- 2002 004 189
- US-A1- 2007 254 265

## Description

### FIELD OF THE INVENTION

The present invention concerns an osteo-integratable biomedical implant with a conometric connection, particularly but not exclusively of the dental type.

### BACKGROUND OF THE INVENTION

In the field of osteo-integratable biomedical implants, the implant or support device described in the Italian patent n. 1.381.193 property of ORALPLANT s.r.l. is particularly known. This known implant comprises an endosseous element configured to be screwed onto the mandibular bone of a patient and is provided with an axial clamping seating, an upper support, also called "stump", associable to the endosseous element and provided with a through axial cavity, and a coupling screw, screwed below in the axial clamping seating and having its head in the through axial cavity, to determine the reciprocal coupling of the endosseous element and the stump. A dental crown is suitable to be attached to the stump. In this known implant, the through axial cavity of the stump has a first conical portion which cooperates with a corresponding second conical portion of the head of the coupling screw.

The known implant has the disadvantage, however, that its edges are too sharp, especially in the joint part between the endosseous element and the stump; therefore, when the former is implanted in the bone part of a patient, it does not guarantee an adequate irroration of blood, either in the bone part itself or in the corresponding gum.

WO-A-2006/008346 describes a coronoradicular one-piece permanent dental implant which is provided with an intraosseous anchoring section and an intraoral section in the form of a cup having a coronal stem extending upwards from the base thereof. The cup is tapered in the intraosseous section and is inverted in relation to the coronal stem. A gripping system è used to manipulate the implant and screw same in the bone.

US-A-2002/0004189 describes a very complex and expensive dental implant which comprises a implant body portion configured to lie below a crest of a patient's jawbone and an abutment portion which comprises a flared portion, a shoulder portion and a final restoration portion. A healing cap includes a body portion having both an inner cavity to fit over the final restoration portion and a tissue retraction flange at the distal end that extends below the shoulder portion when the healing cap is coupled to the abutment portion.

US-A-2007/0254265 describes a dental prosthesis which comprises an implant, an abutment and a crown. The abutment has distal and proximal segments and defines an abutment shoulder therebetween. The abutment shoulder is configured to circumferentially engage the outer surface of the implant proximal segment such that an implant abutment joint is defined therebetween. The crown is configured to be positioned over the abutment and the implant such that the crown covers the implant abutment joint.

Therefore, in these known implants, there is no biological action, or only an ineffective one, that has to be created in the connection zone between the endosseous element and the stump, when a stable and sealing connection is required, by means of a conometric coupling.

In the field of implantology the conical connection is also called "Morse taper connection", even if the degree of conicity of the cones coupling with each other is greater than 1°.

In fact, in the state of the art, the prosthetic connection, for example female, in the endosseous element, made to adhere to the corresponding conical connection, for example male, of the stump, has several problems. Firstly, it has been shown that in order for the blood to circulate, there must be no obstacles or steps, due to its biological nature itself; otherwise it causes bone re-absorption. Indeed it is known that the bones of the human body are always regenerated when the blood stream is in a harmonious condition of flow, because there are no sharp edges in the human body.

Furthermore, all the tissues, whether hard or soft, that make up the human body, which for any reason are not supplied with blood at an adequate pressure, are re-absorbed, shrink and are therefore destined to die.

Additionally, in known implants there are also problems of accuracy from other viewpoints as well, that is, breakage of the implant in the coupling part, especially when the neck of the endosseous element is made with limited thicknesses.

Purpose of the present invention is to obtain an osteo-integratable biomedical implant with a conometric connection that is simple and reliable, especially with regard to the positive effects connected to the correct irroration of blood when the implant is implanted in the human body.

The Applicant has devised, tested and embodied the present invention to overcome the shortcomings of the state of the art and to obtain these and other purposes and advantages.

### SUMMARY OF THE INVENTION

The present invention is defined by claim 1, while the dependent claims describe other characteristics of the invention. In accordance with the present invention, an osteo-integratable biomedical implant comprises an endosseous element configured to be attached to a patient's bone part, a stump configured to be coupled with the endosseous element by means of a conometric connection coupling, and a clamping screw configured to selectively clamp the stump to the endosseous element.

According to one characteristic of the present invention, the endosseous element comprises an axial cavity having a threaded lower part and an upper zone shaped like a truncated cone, configured to function as a female or male element, in the conometric connection coupling. Furthermore, the stump has at least a truncated cone part suitable to couple with the upper truncated cone part of the endosseous element and configured to function as a female or male element respectively, in the conometric connection coupling. An upper part of the endosseous element and/or an external part of the stump is shaped externally with a circular profile shaped like the mouthpiece of a flute so as to define an annular cavity with a smooth and continuous surface, suitable in use to be disposed in the zone comprised between the crest of the patient's bone part and gum part.

According to one characteristic of the present invention, the surface in contact with the female conical part is obtained from an internal cavity in a cylindrical element, with the initial part of its axial cavity deliberately created tapered and thin, so that its characteristic of conometric connection closure can adhere, due to the elasticity of the material, to the male element in conometric coupling in a sealed manner.

In fact, the initial part of the external neck or collar with the internal conical connection is thin in shape, advantageously with a circular profile shaped like the mouthpiece of a flute, which continues its harmonious external conformation so as to promote the natural blood flow to the bone and gum, minimizing the step effect in the conometric coupling in the joint between the two components (endosseous element and stump).

The conometric connection coupling of the endosseous element and the stump used in the present invention has both a closing and a sealing function, and is particularly important in the field of dental implantology. This is unlike the known devices on the market today, where there are considerable problems in the closing and unscrewing due to a lack of precision in construction. With the conical connection adopted by the present invention, these problems are solved.

The choice according to the present invention of the shape like the mouthpiece of a flute as the start of the connection, as well as the advantageous biological result in the tissues affected, both hard and soft, is also intended to give a secure closure even in the event of possible construction defects, in particular in the conical connection. This occurs by taking into account the zone where the closure is to take place: either in the lower part of the female conical part, or in the upper part of it. In fact, if it were decided to obtain the closure in the lower part of the female conical part, where the strength of the component is greater, it might be impossible to seal the two components, because a fissure might be formed due to the incorrect positioning of the two conical parts, that is, the endosseous element (below) and the stump (above). Such a fissure would be very dangerous due to the probable formation of infections in the vital tissues (peri implantitis), which must take root on the surface of the two components (endosseous element and stump). The implant according to the present invention prevents this from happening both immediately and also throughout the patient's life.

Indeed, the technical solution adopted allows to obtain a closure and sealing in the upper zone of the female conical part, that is, in the initial and wider zone of the conical hole in the neck or collar of the endosseous element, given the complications described above, which there would be if the coupling were made in the lower zone. Therefore, this technical choice is certainly advantageous due to the primary importance assumed by the vitality of the bone and gum tissues.

With the solutions described above, the multiple characteristics and advantages obtained by the present invention can easily be seen: the prosthetic part anchoring to the collar of the endosseous element with a conometric connection, with its sealed circular profile shaped like a mouthpiece of a flute, the coupling end that finishes thin, with anatomical adhesion of the vital tissues.

Until today a solution of this type, which exploits the elasticity of the metal in the fine thicknesses to obtain a secure sealed closure, guaranteed by a wider contact surface in the conometric connection coupling, has never been used.

In this way every possible step or roughness formed in the zone where the female conical connection and the male conical connection meet is eliminated, because the present invention exploits the activity of the elasticity of the material, for example metal, preferably titanium, due to its circular shape like the mouthpiece of a flute, thus creating the possible elasticity of the material by means of the fine thickness which gradually increases and strengthens on the body of the endosseous element or of the stump.

In this way an advantageous flow of blood is obtained, and a beneficial effect of osteo-integration and/or bio-compatibility of the soft tissues, which guarantees the elastic band of the soft tissues for the permanence of the osteo-integration in the implant.

The effect of the conical connection shaped like the mouthpiece of a flute extends the possibility of adhesion of the two conical components, female and male, which can be obtained in the endosseous element and also in the stump, wherein the connection shaped like the mouthpiece of a flute extends the connection zone, giving the male element inserted in the female element the possibility of being more elastic in its conical adhesion and therefore of moving the breakage effect of the material to a rigidly constrained point as still occurs in the types of connection found in the prior state of the art, with considerable thicknesses of the female part.

Furthermore, in making the two conical parts, female and male, due to the normal tolerance play of the two parts, as the point of first contact the thinnest external female part was chosen, shaped like the mouthpiece of a flute. In the present invention, in order to avoid the risk, and even certainty, of contamination between the two parts, male and female, the point of contact of the conicity always occurs considering as the support point the thinnest and outermost profile of the female conical part, which implies a very slight difference (less than 1°) between the two non-parallel conicities, but with the more tapered male part that goes inside the female part.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 shows a longitudinal section of an osteo-integratable biomedical implant with a conometric connection according to the present invention, in a first form of embodiment;
- fig. 2 shows a longitudinal section of an osteo-integratable biomedical implant with a conometric connection according to the present invention, in a second form of embodiment;
- fig. 3 shows an enlarged detail of fig. 2.

To simplify the description and facilitate comprehension according to the present invention, in the two forms of embodiment shown, the same reference numbers have been used, where possible, to identify identical common elements.

Furthermore, the terms high, low, lower and upper are purely indicative and are used here to illustrate the present invention better with reference to the drawings: they must not therefore be considered restrictive of the present invention.

### DETAILED DESCRIPTION OF SOME FORMS OF EMBODIMENT

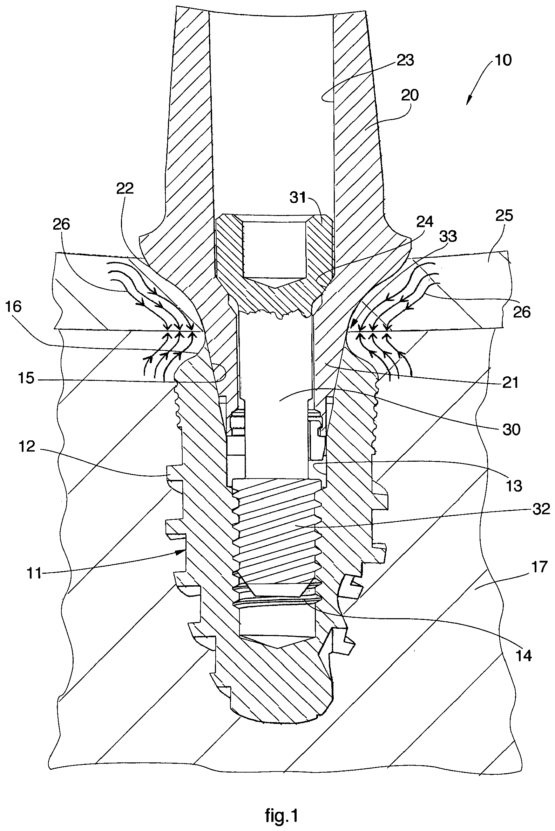

With reference to fig. 1, an implant 10 of the osteo-integratable biomedical type according to the present invention, in a first form of embodiment, essentially comprises three components, for example made of titanium.

A first component is an endosseous element 11, having a threaded external surface 12 and provided internally with an axial cavity 13, having a threaded lower part 14 and an upper zone 15 shaped like a truncated cone, flared toward the outside, with a conicity comprised for example between about 1° and about 15°, in this case about 8°. An upper part 16 of the endosseous element 11, also known as neck or collar, is shaped with a circular shape like the mouthpiece of a flute, that is, so that it is gradually tapered upward and has its external surface without any sudden variations in diameter.

The endosseous element 11 is suitable to be screwed, in any known manner, into a bone part 17 of a human body or animal, for example the mandibular bone on which the teeth, not shown in the drawings, are attached.

A second component of the implant 10 is a stump 20, provided with a lower part 21 shaped like a truncated cone downward, having externally the same conicity, with the necessary tolerance play, as the upper zone 15 of the axial cavity 13 of the endosseous element 11, and suitable to be coupled therewith in order to achieve a conometric connection coupling, or Morse taper connection.

The stump 20 is also provided both with an external connection surface 22, continuous with the truncated cone surface of the lower part 21 and also without sudden variations in diameter, and also with a through axial cavity 23, provided with a flat and/or conical radial shoulder 24.

A part of the patient's gum 25, associated with the bone part 17, is suitable to cooperate with the external connection surface 22 of the stump 20: both parts 25 and 17 are irrorated by the patient's blood stream, schematized by the arrows 26.

A third component of the implant 10 is a clamping screw 30, having a head 31, suitable to be inserted from above into the axial cavity 23 of the stump 20, to cooperate with the flat and/or conical radial shoulder 24 of the latter. The clamping screw 30 also comprises a threaded lower part 32, suitable to be screwed into the threaded part 14 of the endosseous element 11.

When the endosseous element 11 and the stump 20 are coupled and reciprocally clamped by the clamping screw 30 (position shown in fig. 1), there is no sudden discontinuity between the external surfaces of the first two components 11 and 20 so that, advantageously, both the bone part 17 and the gum part 25 can be continuously irrorated by the blood stream 26.

In fact, the external surface of the neck 16 of the endosseous element 11 and the external connection surface 22 form a single smooth annular cavity 33, without edges and roughness which, during use, is destined to cooperate with the crest of the bone part 17 and the gum part 25.

It should be noted that in the first form of embodiment as described heretofore, in the conometric coupling the endosseous element 11 functions as the female component and the stump 20 functions as the male component.

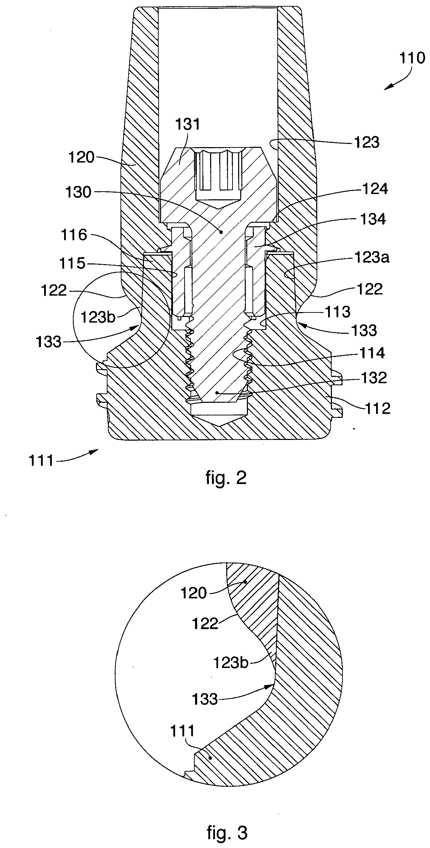

With reference to fig.2, an implant 110 of the osteo-integratable biomedical type according to the present invention, in a second form of embodiment, has the conometric coupling functions substantially inverted, since in this form of embodiment the endosseous element 111 functions as the male element and the stump 120 functions as the female element.

More particularly, the endosseous element 111 has its lower part 112 threaded externally, which in this case has a bigger diameter than the upper part 116, which is shaped like a truncated cone.

The upper part 116 has its external surface with a conicity comprised between about 1° and about 15°, in this case about 2°. Furthermore, the upper part 116 of the endosseous element 111 has an axial cavity 113 which has an outermost portion 115 with a polygonal cross section, for example hexagonal, and a threaded innermost portion 114.

Furthermore, the external surface of the upper part 116 of the endosseous element 111 is gently connected with the lower part 112.

The through axial cavity 123 of the stump 120 has a lower part 123a shaped like a truncated cone and flared outward, that is, downward in fig. 2.

The conicity of the lower part 123a of the through axial cavity 123 is equal to that of the external surface of the upper part 116 of the endosseous element 111, with an adequate tolerance needed to determine contact between the endosseous element 111 and stump 120, preferably in the lowest zone of the latter, indicated by the reference number 123b (figs. 2 and 3), so as thus to achieve the conometric connection or Morse taper connection.

Furthermore, in correspondence with the lower part 123a of the through axial cavity 123, the external surface 122 of the stump 120 is tapered and connected continuously and gently with the corresponding truncated cone surface of the truncated cone upper part 116 of the endosseous element 111, to form with it, in use, a single annular cavity 133.

As in the first form of embodiment described above, both the gum part 25 and also the crest of the bone part 17 (not shown in figs. 2 and 3 because identical to those in fig. 1), are suitable to cooperate with the annular cavity 133, and are both irrorated by the blood stream 26 even though, in cases of bone or gum re-absorption, the annular cavity 133 could also be exposed and not cooperate with the gum part 25.

The clamping screw 130 is suitable to be inserted from above into the axial cavity 123 of the stump 120 and has its lower part 132 threaded so as to be screwed into the threaded innermost part 114 of the axial cavity 113 of the endosseous element 111. The head 131 of the clamping screw 130 is suitable to cooperate with a shoulder 124 made in the through axial cavity 123 of the stump 120.

Furthermore, the clamping screw 130 comprises a cylindrical central part, inserted axially into an axial bushing 134 disposed in the outermost portion 115 of the axial cavity 113 and which functions as a guide for the clamping screw 130. The axial bushing 134 comprises lateral reference faces, for example six, which form a hexagonal cross section which couple with the outermost portion 115 of the cavity 113 of the endosseous element 111, which as we have seen has a polygonal cross section, for example hexagonal, so that the axial bushing 134 cannot rotate with respect to the latter. The scope of the present invention is defined by the appended claims.

## Claims

1. Osteo-integratable biomedical implant comprising an endosseous element (11, 111) configured to be attached to the osseous part (17) of a patient, a stump (20, 120) configured to be coupled with said endosseous element (11, 111) by means of a conometric connection coupling, and a clamping screw (30, 130) configured to selectively clamp said stump (20, 120) to said endosseous element (11, 111), wherein said endosseous element (11, 111) comprises an axial cavity (13, 113) having a threaded lower part (14, 114) and an upper zone (15, 16; 115, 116) shaped like a truncated cone, configured to function as a female or male element in said conometric connection coupling, wherein said stump (20, 120) has at least a lower truncated cone part (21, 123a) suitable to couple with said upper zone (15, 16; 115, 116) shaped like a truncated cone of said endosseous element (11, 111) and configured to function as a female or male element respectively in said conometric connection coupling, wherein an upper part (16; 116) of said endosseous element (11, 111) and an external part of said stump (20, 120) are shaped externally with a circular profile shaped like the mouthpiece of a flute so as to define an annular cavity (33, 133) with a smooth and continuous surface, wherein said upper part (16, 116) of said endosseous element (11, 111) is externally tapered upward, with the external surface having no sudden variations in diameter, and wherein said stump (20, 120) is provided with a rounded external surface (22, 122), configured to be continuous with the external surface of said upper part (16; 116) of said endosseous element (11, 111) when said stump (20, 120) is coupled with said endosseous element (11, 111), wherein said rounded external surface (22, 122) also has no sudden variations in diameter.

2. Implant as in claim 1, **characterized in that** said upper zone shaped like a truncated cone is made in an axial cavity of said endosseous element (11).

3. Implant as in claim 1, **characterized in that** said upper zone shaped like a truncated cone is made in the external upper part of said endosseous element (111).

4. Implant as in claim 1, **characterized in that** said truncated cone part of said stump (20) comprises a lower part (21) of said stump (20).

5. Implant as in claim 1, **characterized in that** said truncated cone part of said stump (120) comprises a lower part (123a) of an axial cavity (123) of said stump (120).

6. Implant as in claim 1, **characterized in that** said stump (20, 120) also comprises a through axial cavity (23, 123) provided with a shoulder (24, 124) with which a head (31, 131) of said clamping screw (30, 130) is suitable to cooperate.

## Patentansprüche

1. Osteointegrierbares biomedizinisches Implantat, umfassend ein enossales Element (11, 111), welches dazu ausgebildet ist, um an dem knöchernen Teil (17) eines Patienten befestigt zu werden, einen Stumpf (20, 120), der dazu ausgebildet ist, um mittels einer konometrischen Verbindungskupplung mit dem enossalen Element (11, 111) verbunden zu werden und einer Klemmschraube (30, 130), die dazu ausgebildet ist, um den Stumpf (20, 120) selektiv an das enossale Element (11, 111) zu klemmen, wobei das enossale Element (11, 111) einen axialen Hohlraum (13, 113) umfasst, mit einem unteren Teil (14, 114), der mit Gewinde versehen ist, und einer oberen Zone (15, 16; 115, 116) in Form eines Kegelstumpfes, die dazu ausgebildet ist, um in der konometrischen Verbindungskopplung als ein weibliches oder männliches Element zu funktionieren, wobei der Stumpf (20, 120) mindestens einen unteren kegelstumpfförmigen Teil (21, 123a) aufweist, der geeignet ist, mit der oberen kegelstumpfförmigen Zone (15, 16; 115, 116) des enossalen Elements (11, 111) zu koppeln und dazu ausgebildet ist, um entsprechend als ein weibliches oder männliches Element in der konometrischen Verbindungskopplung zu funktionieren,wobei ein oberer Teil (16, 116) des enossalen Elements (11, 111) und ein äußerer Teil des Stumpfs (20, 120) außen mit einem kreisförmigen Profil geformt sind, das wie das Mundstück einer Flöte geformt ist, um einen ringförmigen Hohlraum (33, 133) mit einer glatten und kontinuierlichen Oberfläche zu definieren, wobei der obere Teil (16, 116) des enossalen Elements (11, 111) außen nach oben hin verjüngt ist, wobei die äußere Oberfläche keine plötzlichen Durchmesserschwankungen aufweist, wobei der Stumpf (20, 120) mit einer abgerundeten äußeren Oberfläche (22, 122) versehen ist, die so ausgebildet ist, dass sie zu der äußeren Oberfläche des oberen Teils (16,116) des enossalen Elements (11, 111) durchgehend ist, wenn der Stumpf (20, 120) mit dem enossalen Element (11, 111) gekoppelt ist, wobei auch die gerundete äußere Oberfläche (22, 122) keine plötzlichen Durchmesserschwankungen aufweist.

2. Implantat nach Anspruch 1, **dadurch gekennzeichnet, dass** die obere kegelstumpfförmige Zone in einem axialen Hohlraum des enossalen Elements (11) ausgebildet ist.

3. Implantat nach Anspruch 1, **dadurch gekennzeichnet, dass** die obere kegelstumpfförmige Zone im äußeren oberen Teil des enossalen Elements (111) ausgebildet ist.

4. Implantat nach Anspruch 1, **dadurch gekennzeichnet, dass** der kegelstumpfförmige Teil des Stumpfs (20) einen unteren Teil (21) des Stumpfs (20) umfasst.

5. Implantat nach Anspruch 1, **dadurch gekennzeichnet, dass** der kegelstumpfförmige Teil des Stumpfs (120) einen unteren Teil (123a) eines axialen Hohlraums (123) des Stumpfs (120) umfasst.

6. Implantat nach Anspruch 1, **dadurch gekennzeichnet, dass** der Stumpf (20, 120) auch einen durchgehenden axialen Hohlraum (23, 123) umfasst, der mit einer Schulter (24, 124) versehen ist, mit der ein Kopf (31, 131) der Klemmschraube (30, 130) geeignet ist, zusammenzuwirken.

## Revendications

1. Implant biomédical ostéo-intégrable comprenant un élément endo-osseux (11, 111) configuré pour être attaché à la partie osseuse (17) d'un patient, un moignon (20, 120) configuré pour être couplé audit élément endo-osseux (11, 111) au moyen d'un couplage de raccord conométrique, et une vis de serrage (30, 130) configurée pour serrer de manière sélective ledit moignon (20, 120) audit élément endo-osseux (11, 111), ledit élément endo-osseux (11, 111) comprenant une cavité axiale (13, 113) ayant une partie inférieure filetée (14, 114) et une zone supérieure (15, 16 ; 115, 116) de forme tronconique, configurée pour servir d'élément femelle ou mâle dans ledit couplage de raccord conométrique, ledit moignon (20, 120) ayant au moins une partie tronconique inférieure (21, 123a) appropriée pour se coupler à ladite zone supérieure de forme tronconique (15, 16 ; 115, 116) de forme tronconique dudit élément endo-osseux (11, 111) et configurée pour servir d'élément femelle ou mâle, respectivement, dans ledit couplage de raccord conométrique,
une partie supérieure (16 ; 116) dudit élément endo-osseux (11, 111) et une partie externe dudit moignon (20, 120) étant formées extérieurement avec un profil circulaire en forme d'embout de flûte de façon à définir une cavité annulaire (33, 133) avec une surface lisse et continue,
ladite partie supérieure (16, 116) dudit élément endo-osseux (11, 111) étant effilée extérieurement vers le haut, la surface externe ayant aucune variation soudaine de diamètre, et
ledit moignon (20, 120) comportant une surface externe arrondie (22, 122), configurée pour être continue avec la surface externe de ladite partie supérieure (16 ; 116) dudit élément endo-osseux (11, 111) lorsque ledit moignon (20, 120) est couplé audit élément endo-osseux (11, 111), ladite surface externe arrondie (22, 122) ayant aucune variation soudaine de diamètre.

2. Implant selon la revendication 1, **caractérisé par le fait que** ladite zone supérieure de forme tronconique est réalisée dans une cavité axiale dudit élément endo-osseux (11, 111).

3. Implant selon la revendication 1, **caractérisé par le fait que** ladite zone supérieure de forme tronconique est réalisée dans la partie supérieure externe dudit élément endo-osseux (111).

4. Implant selon la revendication 1, **caractérisé par le fait que** ladite partie tronconique dudit moignon (20) comprend une partie inférieure (21) dudit moignon (20) .

5. Implant selon la revendication 1, **caractérisé par le fait que** ladite partie tronconique dudit moignon (120) comprend une partie inférieure (123a) d'une cavité axiale (123) dudit moignon (120).

6. Implant selon la revendication 1, **caractérisé par le fait que** ledit moignon (20, 120) comprend également une cavité axiale traversante (23, 123) comportant un épaulement (24, 124) avec lequel une tête (31, 131) de ladite vis de serrage (30, 130) est apte à coopérer.
